# EUROPEAN PATENT APPLICATION

(11) **EP 4 761 238 A1**
(43) Date of publication of application: **17.06.2026**
(21) Application number: 24868437.5
(22) Date of filing: 12.07.2024
(51) Int. Cl.: H04N 13/361, H04N 13/363, H04N 13/383, H04N 13/128, H04N 23/57

(54) **PROJECTION DEVICE AND OPERATION METHOD THEREOF**

(30) Priority: 20.09.2023 KR 20230125845
(71) Applicant: Samsung Electronics Co., Ltd., Suwon-si, Gyeonggi-do 16677 (KR)
(72) Inventor: SHIN, Hyungjong, Suwon-si, Gyeonggi-do 16677 (KR); KIM, Yejin, Suwon-si, Gyeonggi-do 16677 (KR); KIM, Jungkeun, Suwon-si, Gyeonggi-do 16677 (KR); LEE, Pius, Suwon-si, Gyeonggi-do 16677 (KR); LEE, Chaebin, Suwon-si, Gyeonggi-do 16677 (KR)
(74) Representative: Walaski, Jan Filip
(86) International application number: PCT/KR2024/010055
(87) International publication number: WO 2025/063455

(57) **Abstract**

A projection device includes a projection unit, a memory storing one or more instructions, and at least one processor configured to execute the one or more instructions to obtain a first image, obtain spatial information of a screen and location information of a user, generate a three-dimensional (3D) object image and a background image, based on the spatial information of the screen and the location information of the user, and control the projection unit to project a second image obtained by synthesizing the first image, the 3D object image, and the background image.

## Description

### Technical Field

The disclosure relates to a projection device for projecting an image and an operating method thereof.

### Background Art

A projection device may refer to a device for projecting an image onto a screen or a space. The projection device may include a projector, a device for providing virtual reality (VR), augmented reality (AR), or mixed reality (MR), etc. The projection device is used in various fields, for example, may be used to give a lecture or presentation in a classroom or a conference room and may be used to project a movie onto a screen in a theater. The device for providing VR, AR, or MR may provide experience as when a user is watching a movie in a theater by displaying an image on a screen (display) located near the eyes of the user when the user wears the device.

Recently, a home theater has been configured using the projector and cases where image content is viewed through a big screen, for example, a movie watched or a game played on a big screen, have increased. When viewing the image content using the projector, not only are high resolution of the image content and projection performance important, but so too is a viewing environment.

### Disclosure of Invention

### Solution to Problem

A projection device according to an example embodiment of the disclosure includes a projection unit including projection circuitry, a memory storing one or more instructions, and at least one processor, comprising processing circuitry, individually and/or collectively configured to execute the one or more instructions.

At least one processor, individually and/or collectively, may be configured to obtain a first image.

At least one processor, individually and/or collectively, may be configured to obtain spatial information of a screen and location information of a user.

At least one processor, individually and/or collectively, may be configured to generate a three-dimensional (3D) object image and a background image, based on the spatial information of the screen and the location information of the user.

At least one processor, individually and/or collectively, may be configured to control the projection unit to project a second image obtained by synthesizing the first image, the 3D object image, and the background image.

A method of operating a projection device according to an example embodiment of the disclosure includes obtaining a first image.

The method according to an example embodiment of the disclosure may include obtaining spatial information of a screen.

The method according to an example embodiment of the disclosure may include obtaining location information of a user.

The method according to an example embodiment of the disclosure may include generating a 3D object image and a background image, based on the spatial information of the screen and the location information of the user.

The method according to an example embodiment of the disclosure may include projecting a second image obtained by synthesizing the first image, the 3D object image, and the background image.

### Brief Description of Drawings

The above and other aspects, features and advantages of certain embodiments of the present disclosure will be more apparent from the following detailed description, taken in conjunction with the accompanying drawings, in which:
FIG. 1 is a diagram illustrating an example projection environment according to an embodiment of the disclosure;
FIG. 2 is a diagram illustrating an example configuration of a virtual space image according to an embodiment of the disclosure;
FIG. 3 is a flowchart illustrating an example method of operating a projection device, according to an embodiment of the disclosure;
FIG. 4 is a diagram illustrating an operation in which a projection device obtains spatial information of a screen and location information of a user, according to an embodiment of the disclosure;
FIGS. 5 and 6 are diagrams illustrating an example operation in which a projection device generates a background image and a three-dimensional (3D) object image, according to an embodiment of the disclosure;
FIG. 7 is a diagram illustrating an example operation in which a projection device determines a background image based on an image to be projected, according to an embodiment of the disclosure;
FIG. 8 is a flowchart illustrating an example method of operating a projection device, according to an embodiment of the disclosure;
FIG. 9 is a diagram illustrating an example operation in which a projection device changes a virtual space image as a location of a user changes, according to an embodiment of the disclosure;
FIG. 10 is a flowchart illustrating an example method of operating a projection device, according to an embodiment of the disclosure;
FIG. 11 is a diagram illustrating an example operation in which a projection device changes a virtual space image as time information changes, according to an embodiment of the disclosure;
FIGS. 12 and 13 are diagrams illustrating examples in which a projection device provides various virtual space images, according to an embodiment of the disclosure;
FIG. 14 is a diagram illustrating an example operation of a projection device when a plurality of users are recognized, according to an embodiment of the disclosure;
FIG. 15 is a diagram illustrating an example operation in which a projection device projects a virtual space image, according to an embodiment of the disclosure; and
FIG. 16 is a block diagram illustrating an example configuration of a projection device according to an embodiment of the disclosure.

### Mode for the Invention

Throughout the disclosure, the expression "at least one of a, b or c" indicates only a, only b, only c, both a and b, both a and c, both b and c, all of a, b, and c, or variations thereof. The terms used in the disclosure will be briefly defined, and the disclosure will be described in greater detail with reference to the drawings.

All terms including descriptive or technical terms which are used herein should be construed as having meanings that are apparent to one of ordinary skill in the art. However, the terms may have different meanings according to the intention of one of ordinary skill in the art, precedent cases, or the appearance of new technologies. Also, some terms may be arbitrarily selected, and in this case, the meaning of the selected terms will be described in detail in the detailed description of the disclosure. Thus, the terms used herein have to be defined based on the meaning of the terms together with the description throughout the disclosure.

When a part "includes" or "comprises" an element, unless there is a particular description contrary thereto, the part may further include other elements, not excluding the other elements. In addition, terms such as "unit", "-or/-er", and "module" described in the disclosure may refer to a unit that processes at least one function or operation, which may be implemented in hardware or software, or implemented in a combination of hardware and software.

Hereinafter, various example embodiments of the disclosure will be described in greater detail with reference to the accompanying drawings. However, the disclosure may be implemented in various different forms and is not limited to an embodiment of the disclosure described herein. Also, in the drawings, parts irrelevant to the description may be omitted in order to clearly describe the disclosure, and like reference numerals designate like elements throughout the disclosure.

In the present disclosure, the term "user" according to an embodiment of the disclosure may refer to a person who controls a system, a function, or an operation, and may include a developer, a manager, or an installation engineer.

In the present disclosure, an "image" or a "picture" according to an embodiment of the disclosure may refer to a still image, a moving image including a plurality of continuous still images (or frames), or a video.

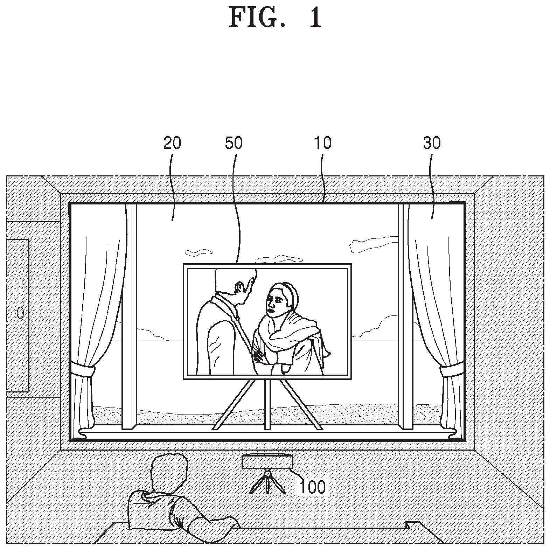

FIG. 1 is a diagram illustrating an example projection environment according to an embodiment of the disclosure.

Referring to FIG. 1, a projection device 100 according to an embodiment of the disclosure may project image content 50 and an image 10 (hereinafter referred to as a virtual space image) representing a virtual space onto a screen. Here, the screen onto which the image 10 is projected may be configured in any one of various forms. When the projection device 100 is a projector, the screen may refer to a physical space onto which the image content 50 is projected. For example, the screen may include a wall or a screen formed of fabric.

When the projection device 100 is a device providing virtual reality (VR), augmented reality (AR), or mixed reality (MR), the screen may refer to a display included in the projection device 100. For example, the device providing VR, AR, or MR may be implemented in the form a glasses type wearable device including a head mounted display (HMD), which is mountable on a head part, and may include a display. The display may be a transparent display or an opaque display. The device for providing VR, AR, or MR may output (display) the image content 50 to the display.

Hereinafter, for convenience of descriptions, a case where the projection device 100 is a projector is described as an example, but the disclosure may be equally applied even when the projection device 100 is the device providing VR, AR, or MR.

The projection device 100 according to an embodiment of the disclosure may project not only the image content 50 but also the virtual space image 10 onto the screen, thereby providing users (viewers) with the experience of watching the image content 50 in various environments.

For example, the virtual space image 10 may be projected onto one wall of a living room, as shown in FIG. 1. The virtual space image 10 may include a window, a curtain, a display device, etc., and may include a background image 20 of the sea, city, mountain, etc. shown through the window. However, the disclosure is not limited thereto.

The projection device 100 may generate objects such as the window, the curtain, the display device, etc. included in the virtual space image 10 as a three-dimensional (3D) image 30 (3D object image) according to a location and a gaze direction of a user. In addition, the projection device 100 may generate the background image 20 included in the virtual space image 10 according to the location and the gaze direction of the user, just as the user actually views the sea through the window. Accordingly, the sense of reality may be provided to the user.

The projection device 100 according to an embodiment of the disclosure may overlap and synthesize the background image 20 and the 3D object image 30, and synthesize the image content 50 and the display device included in the 3D object image 30, thereby generating a final image to be projected.

The projection device 100 may project the final image onto the screen, thereby providing the user with an environment just like watching the image content 50 in a space with a sea view.

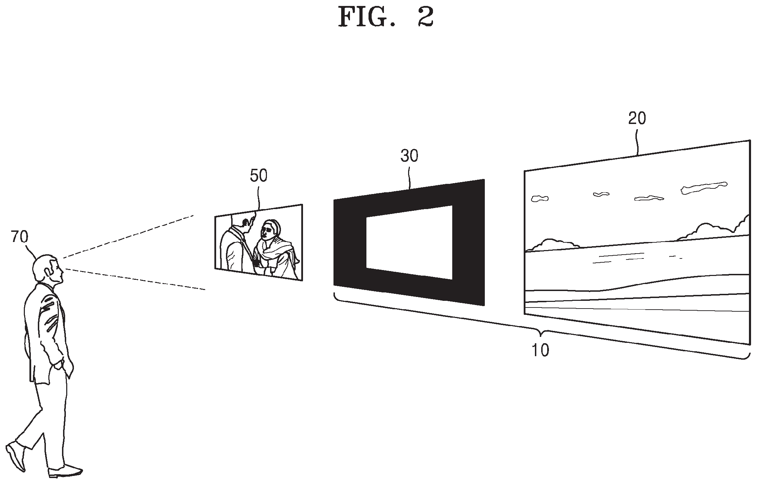

FIG. 2 is a diagram illustrating an example configuration of the virtual space image 10 according to an embodiment of the disclosure.

Referring to FIG. 2, the virtual space image 10 may include the background image 20 and the 3D object image 30. For example, the background image 20 according to an embodiment of the disclosure may include an image representing a background such as the sea, sky, beach, city, mountain, space, etc.

The 3D object image 30 according to an embodiment of the disclosure may include a 3D image representing objects such as a window, a curtain, a shelf, a chair, etc. The projection device 100 may apply a 3D effect according to a gaze direction of a user 70 to the objects included in the 3D object image 30.

In addition, the 3D object image 30 may include an object (e.g., a display) to display the image content 50. However, the disclosure is not limited thereto.

The projection device 100 according to an embodiment of the disclosure may synthesize the 3D object image 30 and the background image 20 to generate the virtual space image 10. The projection device 100 may overlap the 3D object image 30 on the background image 20.

The projection device 100 according to an embodiment of the disclosure may synthesize the virtual space image 10 and the image content 50 to generate a final image to be projected.

The image content 50 according to an embodiment of the disclosure may include content for the user 70 to view. For example, and without limitation, the image content 50 may include a variety of content such as movie, TV program, video, moving picture, online streaming service, advertising content, etc. However, the disclosure is not limited thereto.

The projection device 100 according to an embodiment of the disclosure may overlap the image content 50 and a display object included in the virtual space image 10, thereby generating the final image.

Hereinafter, operations in which the projection device 100 according to an embodiment of the disclosure generates the virtual space image 10 in accordance with a screen and a gaze direction (viewing direction) of the user 70, synthesizes the image content 50 and the virtual space image 10, and projects the synthesized image content are described in greater detail with reference to the drawings.

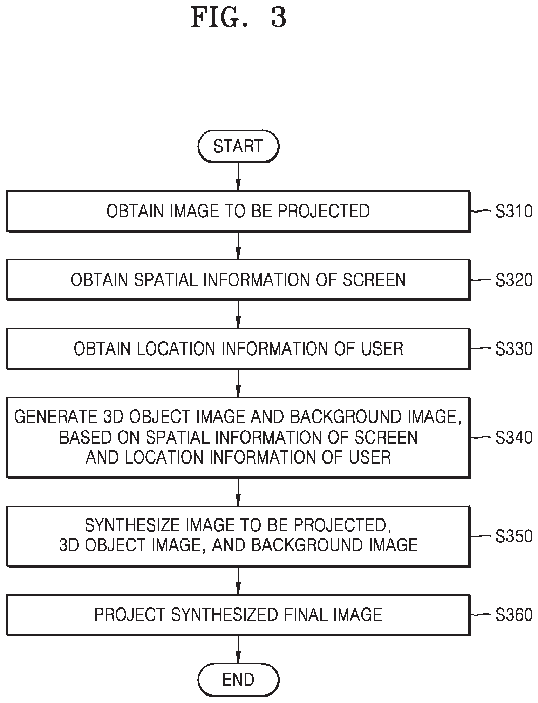

FIG. 3 is a flowchart illustrating an example method of operating the projection device 100 according to an embodiment of the disclosure.

Referring to FIG. 3, the projection device 100 according to an embodiment of the disclosure may obtain an image (image content) to be projected (S310).

The image according to an embodiment of the disclosure may be an image previously stored in the projection device 100 or an image received from an external device. However, the disclosure is not limited thereto. In addition, the image according to an embodiment of the disclosure may be an image on which a variety of image processing such as decoding, scaling, noise filtering, frame rate conversion, resolution conversion, etc. has been performed by a video processor.

The projection device 100 according to an embodiment of the disclosure may obtain spatial information of a screen (S320).

The projection device 100 according to an embodiment of the disclosure may obtain the spatial information of the screen using at least one camera (e.g., an image sensor, a depth sensor, etc.) For example, the projection device 100 may obtain a captured image of the screen from the image sensor, and obtain depth information of the screen from the depth sensor. However, the disclosure is not limited thereto.

The projection device 100 according to an embodiment of the disclosure may receive the captured image of the screen and the depth information of the screen from an external device. The external device may include at least one image sensor and depth sensor. The external device may obtain the captured image of the screen using the image sensor and obtain the depth information of the screen using the depth sensor. The external device may transmit the captured image of the screen and the depth information of the screen to the projection device 100. However, the disclosure is not limited thereto.

The projection device 100 may obtain the spatial information of the screen based on the captured image and the depth information.

The spatial information of the screen may include a shape of the screen, distance information from the projection device 100 to the screen, location information of the screen, size information of the screen, location information about corners (boundaries) of the screen, etc.

For example, the projection device 100 may recognize corners of a wall based on the captured image and the depth information, and based on the recognized corners, identify the size of the screen, the shape of the screen, distance from the projection device 100 to the screen, etc.

The projection device 100 according to an embodiment of the disclosure may obtain location information of a user (S330).

The projection device 100 according to an embodiment of the disclosure may obtain the location information of the user using at least one camera (e.g., an image sensor, an infrared sensor, etc.) For example, the projection device 100 may identify whether the user is present, a distance between the user and the projection device 100, a direction in which the user is located with respect to the projection device 100, etc. However, the disclosure is not limited thereto.

The projection device 100 according to an embodiment of the disclosure may generate a 3D object image and a background image based on the spatial information of the screen and the location information of the user (S340).

The projection device 100 may set the 3D object image and the background image based on a user input. For example, the projection device 100 may set the 3D object image based on a user input that selects one of previously stored candidate template images. The projection device 100 may previously store the candidate template images in which shapes, sizes, locations, etc. of windows included in the images are different.

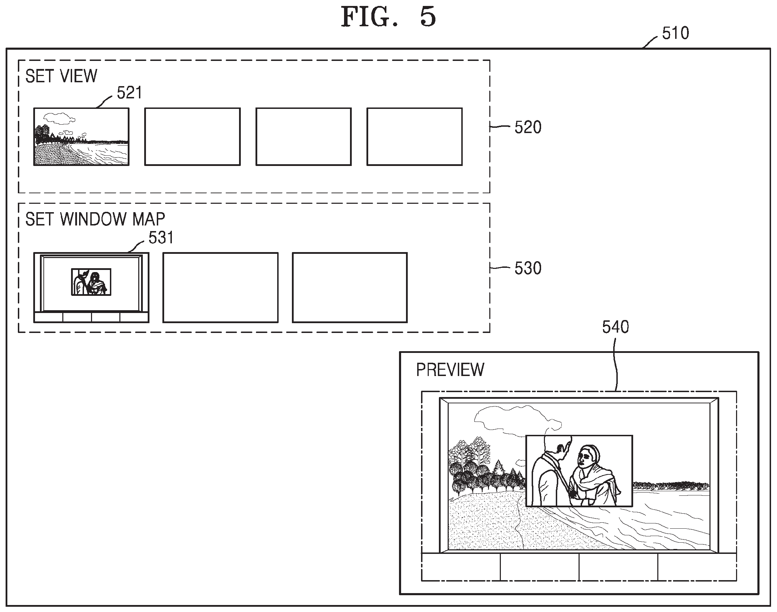

The projection device 100 may set the background image based on a user input that selects one of previously stored candidate background images. The projection device 100 may previously store the candidate background images such as the sea, beach, mountain, city, etc. A method of setting the 3D object image and the background image based on the user input is described in greater detail below with reference to FIG. 5.

The projection device 100 may set the background image based on category information of an image to be projected.

When the 3D object image and the background image are set, the projection device 100 according to an embodiment of the disclosure may adjust the 3D object image and the background image based on the spatial information of the screen and the location information of the user.

For example, the projection device 100 may determine sizes of the 3D object image and the background image based on the spatial information of the screen. The projection device 100 may adjust the sizes of the 3D object image and the background image based on the recognized corners of the wall so that the 3D object image and the background image are projected onto an entire wall. However, the disclosure is not limited thereto.

In addition, the projection device 100 may adjust depth information of objects included in the 3D object image based on the spatial information of the screen and the location information of the user. For example, when a location of the user changes, a viewpoint, a field of view (FOV), a gaze direction, etc. of the user watching the 3D object image may change. The projection device 100 may change a 3D effect that appears in the 3D object image according to the changed viewpoint, FOV, gaze direction, etc. of the user. For example, the projection device 100 may adjust locations, directions, depth information, etc. of the objects included in the 3D object image based on the changed viewpoint, FOV, gaze direction, etc. of the user.

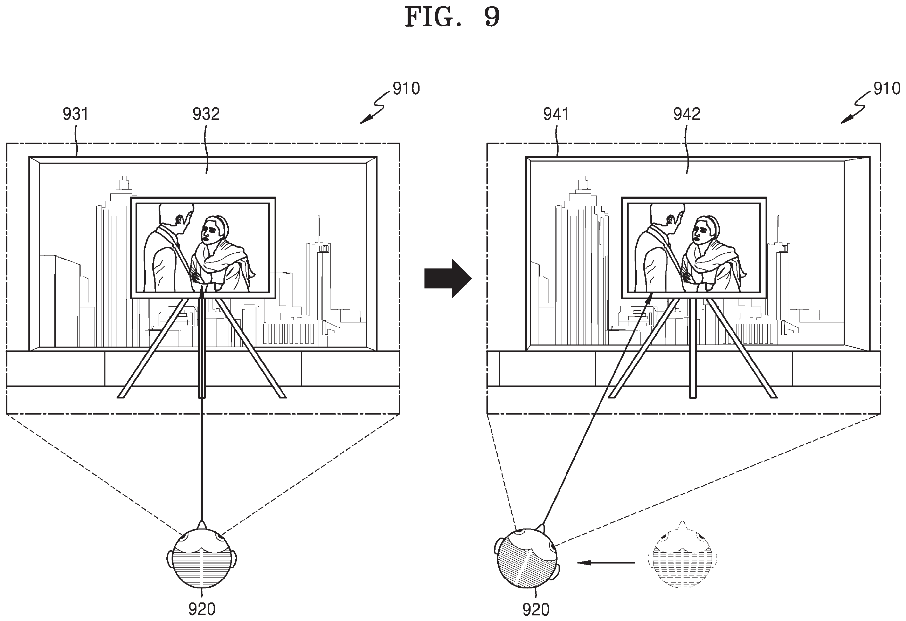

In addition, the projection device 100 may adjust the background image based on the spatial information of the screen and the location information of the user. For example, the projection device 100 may adjust a view of the background image projected onto the screen based on the location information of the user. When the user moves to the left, the projection device 100 may adjust the background image so that an image is added to the right of the background image and a partial area of the left of the background image is deleted. This is described in greater detail below with reference to FIG. 9.

The projection device 100 according to an embodiment of the disclosure may synthesize the image to be projected, the 3D object image, and the background image (S350).

For example, the projection device 100 may synthesize the 3D object image and the background image to generate a virtual space image. The projection device 100 may overlap the 3D object image on the background image to synthesize the 3D object image and the background image.

In addition, the projection device 100 may overlap the image to be projected (image content) onto the virtual space image, thereby generating a final image. For example, the 3D object image may include an object (e.g., a display) for displaying the image to be projected. The projection device 100 may overlap the image (image content) to be projected onto the corresponding object (e.g., the display).

The projection device 100 according to an embodiment of the disclosure may project the final image onto the screen or space (S360).

The projection device 100 according to an embodiment of the disclosure may project not only the image content to be viewed but also the virtual space image onto the screen or space, thereby providing the user with the experience of watching the image content in various environments. In addition, the projection device 100 may adjust the 3D object image and the background image according to the location of the user (viewer). Accordingly, the sense of reality that the user feels regarding the virtual space image may be improved.

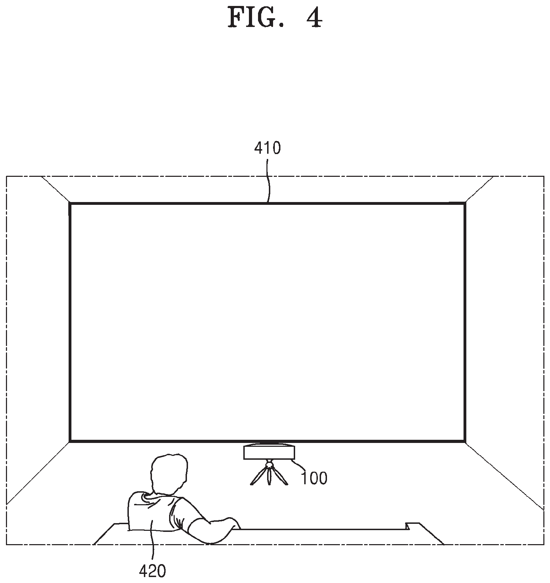

FIG. 4 is a diagram illustrating an example operation in which the projection device 100 obtains spatial information of a screen 410 and location information of a user 420 according to an embodiment of the disclosure.

Referring to FIG. 4, the projection device 100 according to an embodiment of the disclosure may include at least one sensor. The at least one sensor may include an image sensor, a depth sensor, and an infrared sensor. However, the at least one sensor is not limited thereto, and may further include a direction sensor, an illumination sensor, etc.

The projection device 100 according to an embodiment of the disclosure may obtain the spatial information of the screen using the image sensor and the depth sensor. At this time, the image sensor and the depth sensor may be disposed in front of the projection device 100.

The image sensor may include at least one camera and may obtain a captured image of a real space included in a FOV of the camera.

The depth sensor may include at least one camera and may obtain depth information about a real space included in a FOV of the camera. For example, the depth sensor may sense a distance between the projection device 100 and the screen 410.

The projection device 100 may receive a captured image of a space including the screen 410 and depth information from an external device.

The projection device 100 according to an embodiment of the disclosure may include a spatial information obtaining module. The spatial information obtaining module may be a module that performs a function of obtaining the spatial information of the screen 410. The spatial information obtaining module according to an embodiment of the disclosure may include appropriate logic, circuit, interface, and/or code that enable obtaining of the spatial information of the screen 410.

The spatial information obtaining module may obtain the spatial information of the screen 410 based on at least one of an image captured by an image sensor or depth information obtained by a depth sensor.

For example, the spatial information obtaining module may recognize corners between a plurality of sides in a space including the plurality of sides, and determine a boundary of the screen 410 onto which an image is to be projected based on the recognized corners. When the boundary of the screen 410 is determined, the spatial information obtaining module may obtain information about a shape, characteristics, size, location, etc. of the screen 410. However, the disclosure is not limited thereto.

In addition, the spatial information obtaining module may analyze at least one of the image captured by the image sensor or the depth information obtained by the depth sensor using, for example, at least one of machine learning, neural network, or deep learning algorithm as a rule-based or artificial intelligence algorithm, thereby obtaining the spatial information of the screen 410. For example, the spatial information obtaining module may recognize the corners in the space including the plurality of sides using a neural network trained to recognize the corners from an image or depth information about the space to obtain the spatial information of the screen 410. However, the disclosure is not limited thereto.

In addition, the projection device 100 according to an embodiment of the disclosure may recognize the user 420 using the image sensor or an infrared sensor. The projection device 100 may analyze the image captured by the image sensor, thereby determining whether the user 420 is present in the image and, when the user 420 is present, obtain location information of the user 420.

The projection device 100 may identify the presence of the user 420 and obtain a distance to the user 420 using the infrared sensor.

The projection device 100 according to an embodiment of the disclosure may include a user recognition module. The user recognition module may be a module that performs a function of obtaining location information of the user 420. The user recognition module according to an embodiment of the disclosure may include appropriate logic, circuit, interface, and/or code to enable obtaining of the location information of the user 420.

The user recognition module may obtain the location information of the user 420 based on at least one of images captured by the image sensor and the infrared sensor.

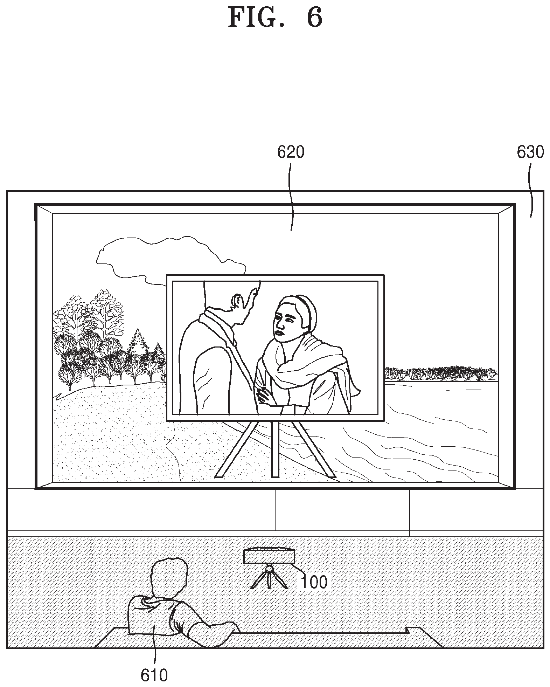

FIGS. 5 and 6 are diagrams illustrating an example operation in which the projection device 100 generates a background image and a 3D object image according to an embodiment of the disclosure.

Referring to FIG. 5, the projection device 100 according to an embodiment of the disclosure may set the background image and the 3D object image based on a user input. In addition, the projection device 100 may set a type or form of a display device (e.g., a TV) to be included in the 3D object image based on a user input.

The projection device 100 according to an embodiment of the disclosure may project a setting menu screen 510 onto a screen or space. The setting menu screen 510 according to an embodiment of the disclosure may include menus for setting the background image, the 3D object image, and the type or form of the display device.

The projection device 100 according to an embodiment of the disclosure may receive a user input that selects the menus through a control device, and may set the background image, the 3D object image, and the type or form of the display device based on the user input.

For example, the setting menu screen 510 may include a first menu 520 for selecting one of previously stored candidate background images. When one of the previously stored candidate background images is selected based on a user input, the projection device 100 may generate the background image to be projected based on the selected background image.

In addition, the setting menu screen 510 may include a second menu 530 for selecting one of previously stored candidate template images. When one of the previously stored candidate template images is selected based on a user input, the projection device 100 may generate the 3D object image to be projected based on the selected template image.

Although not shown, the setting menu screen 510 may include a menu for setting a type or form of a display object for displaying image content to be projected. However, the disclosure is not limited thereto.

In addition, the setting menu screen 510 may include a preview showing a virtual space image 540 in which a first background image 521 and a first template image 531 are synthesized selected based on a user input.

In FIG. 5, the setting menu screen 510 is described as being projected by the projection device 100, but is not limited thereto, and the setting menu screen 510 may be displayed on an external device communicatively connected to the projection device 100. For example, the external device communicatively connected to the projection device 100 may include a display, and the setting menu screen 510 of FIG. 5 may be displayed on a display of the external device. When the background image and the template image are selected based on the user input, the external device may transmit information about the selected background image and template image to the projection device 100. However, the disclosure is not limited thereto.

Referring to FIG. 6, the projection device 100 according to an embodiment of the disclosure may synthesize the selected background image and template image (3D object image) based on the user input to generate a virtual space image.

The projection device 100 according to an embodiment of the disclosure may adjust the selected background image and template image (3D object image) based on spatial information of a screen and location information of a user 610, and generate the virtual space image in which adjusted background image 620 and 3D object image 630 are synthesized.

For example, the projection device 100 may determine sizes or shapes of the background image 620 and the 3D object image 630 based on a size and shape of the screen and a distance to the screen.

The projection device 100 may adjust the 3D object image 630 based on the spatial information of the screen and the location information of the user 610. For example, when a location of the user 610 changes, a viewpoint, gaze direction, FOV, etc. of the user 610 may change. The projection device 100 may adjust locations, directions, depth information, etc. of objects included in the 3D object image 630 based on the changed viewpoint, FOV, gaze direction, etc. of the user 610.

The projection device 100 may adjust the background image 620 according to the changed viewpoint, FOV, gaze direction, etc. of the user 610.

The projection device 100 may synthesize an image to be projected (image content) and a virtual space image in which the adjusted background image 620 and 3D object image 630 are synthesized to generate a final image. The projection device 100 may project the final image onto the screen or space.

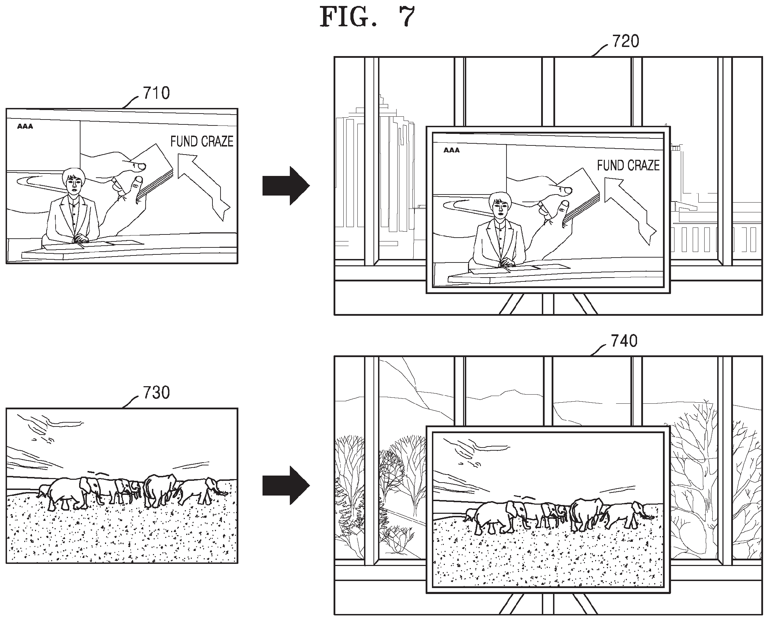

FIG. 7 is a diagram for illustrating an example operation in which the projection device 100 determines a background image based on an image to be projected according to an embodiment of the disclosure.

Referring to FIG. 7, the projection device 100 according to an embodiment of the disclosure may determine a background image based on category information of an image (image content) to be projected. The image content to be projected according to an embodiment of the disclosure may be a TV broadcast program. The projection device 100 may obtain electronic program guide (EPG) information or TV schedule information. The projection device 100 may obtain category information of the TV broadcast program based on the obtained EPG information or TV schedule information. The projection device 100 may determine a background image based on the category information of the TV broadcast program.

For example, as shown in FIG. 7, when the image content is a news broadcast 710, the projection device 100 may determine the background image to be a city view image 720.

When the image content is a nature documentary program 730, the projection device 100 may determine the background image to be a forest view image 740 or a sea view image.

When the image content is an entertainment program, the projection device 100 may determine the background image to be a theme park view image.

The projection device 100 may determine the background image based on a name, title, etc. of the image content. For example, when the title of the image content includes "animal" or when the image content is content related to animal, the projection device 100 may determine the background image to be the forest view image 740. However, the disclosure is not limited thereto.

The projection device 100 may analyze the image content to be projected and obtain information about a mood or theme of the image. For example, the projection device 100 may include an image analysis module including appropriate logic, circuit, interface, and/or code that operates to analyze the image and obtain the information about a category, mood, or theme of the image. The image analysis module may obtain the information about the category, mood, or theme of the image using one or more neural networks. The projection device 100 may determine the background image based on the information about the category, mood, or theme of the image.

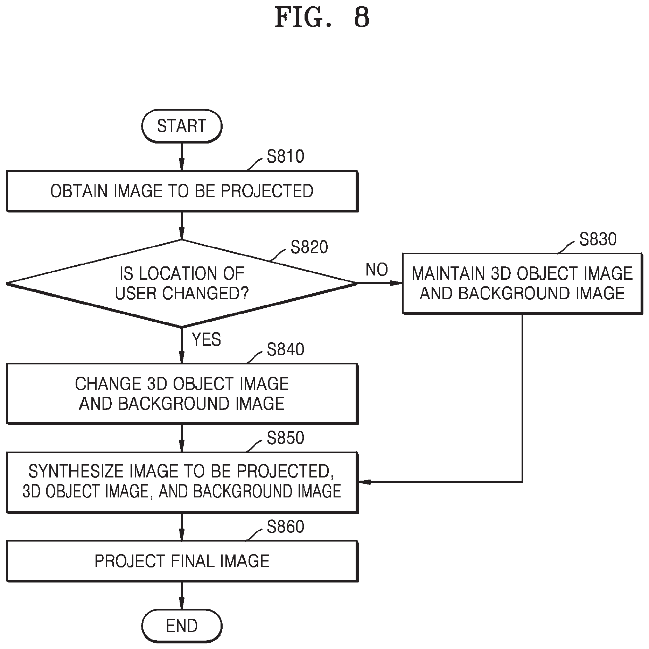

FIG. 8 is a flowchart of illustrating an example method of operating the projection device 100 according to an embodiment of the disclosure.

Referring to FIG. 8, the projection device 100 according to an embodiment of the disclosure may obtain an image to be projected (S810).

The image according to an embodiment of the disclosure may be an image previously stored in the projection device 100 or an image received from an external device. However, the disclosure is not limited thereto. In addition, the image according to an embodiment of the disclosure may be an image on which a variety of image processing such as decoding, scaling, noise filtering, frame rate conversion, resolution conversion, etc. has been performed by a video processor.

When the projection device 100 projects video content, the projection device 100 may sequentially obtain video frame images included in the video content.

The projection device 100 according to an embodiment of the disclosure may identify whether a location of a user has changed (S820).

For example, the projection device 100 may use at least one camera (e.g., an image sensor, an infrared sensor, etc.) to recognize the user around the projection device 100 and identify whether the location of the user has changed.

When the location of the user has not changed, the projection device 100 according to an embodiment of the disclosure may maintain a virtual space image used when projecting a previous frame image without changing the virtual space image (S830).

For example, when the location of the user has not changed, the projection device 100 may continue to maintain a 3D object image and a background image projected along with the previous frame image.

On the other hand, when the location of the user has changed, the projection device 100 may change the 3D object image and the background image (S840).

For example, when the location of the user has changed, a viewpoint, FOV, gaze direction, etc. of the user watching the 3D object image projected onto the screen and the background image may change. The projection device 100 may change a 3D effect that appears in the 3D object image according to the changed viewpoint, FOV, gaze direction, etc. of the user. For example, the projection device 100 may adjust locations, directions, depth information, etc. of objects included in the 3D object image based on the changed viewpoint, FOV, gaze direction, etc. of the user.

In addition, the projection device 100 may adjust the background image according to the changed viewpoint, FOV, gaze direction, etc. of the user.

The projection device 100 according to an embodiment of the disclosure may synthesize the image to be projected, the 3D object image, and the background image (S850).

For example, the projection device 100 may synthesize the 3D object image and the background image to generate a virtual space image. The projection device 100 may overlap the 3D object image on the background image to synthesize the 3D object image and the background image.

In addition, the projection device 100 may overlap the image to be projected (image content) on the virtual space image, thereby generating a final image. For example, the 3D object image may include an object (e.g., a display) for displaying the image to be projected. The projection device 100 may overlap the image (image content) to be projected onto the corresponding object (e.g., the display).

The projection device 100 according to an embodiment of the disclosure may project the final image onto the screen or space (S860).

The projection device 100 according to an embodiment of the disclosure may project not only the image content to be viewed but also the virtual space image onto the screen or space, thereby providing the user with the experience of watching the image content in various environments. In addition, the projection device 100 may adjust the 3D object image and the background image according to the location of the user (viewer). Accordingly, the sense of reality that the user feels regarding the virtual space image may be improved.

FIG. 9 is a diagram illustrating an example operation in which the projection device 100 changes a virtual space image as a location of a user 920 changes according to an embodiment of the disclosure.

Referring to FIG. 9, the projection device 100 according to an embodiment of the disclosure may obtain spatial information of a screen 910 and location information of the user 920. The projection device 100 may generate a first 3D object image 931 and a first background image 932 based on the spatial information of the screen 910 and the location information of the user 920.

The projection device 100 may synthesize the first 3D object image 931 and the first background image 932 to generate a first virtual space image. The projection device 100 may overlap the first 3D object image 931 on the first background image 932 to synthesize the first 3D object image 931 and the first background image 932.

The projection device 100 may overlap an image to be projected onto the first virtual space image, thereby generating a first final image. The projection device 100 may project the first final image onto the screen 910 or space.

The projection device 100 according to an embodiment of the disclosure may detect a change in a location of the user 920. For example, the projection device 100 may detect that the location of the user 920 has changed from a first point to a second point using at least one camera.

When the location of the user 920 changes from the first point to the second point, the projection device 100 may change the first virtual space image. For example, when the user 920 moves to the left, a viewpoint, gaze direction, FOV, etc. of the user 920 may change.

The projection device 100 may adjust locations, directions, depth information, etc. of objects included in the first 3D object image 931 based on the changed viewpoint, FOV, gaze direction, etc. of the user 920. For example, the projection device 100 may generate a second 3D object image 941 so that a depth of a left wall of a window included in the first 3D object image 931 decreases and a depth of a right wall of the window increases. However, the disclosure is not limited thereto.

The projection device 100 may adjust the first background image 932 based on the changed viewpoint, FOV, gaze direction, etc. of the user 920. The projection device 100 may adjust the first background image 932 so that a view seen through the window changes according to the changed viewpoint, FOV, gaze direction, etc. of the user 920. For example, when the user 920 moves to the left, the projection device 100 may generate a second background image 942 so that an image is added to the right of the first background image 932 and a partial area of the left of the first background image 932 is deleted. However, the disclosure is not limited thereto.

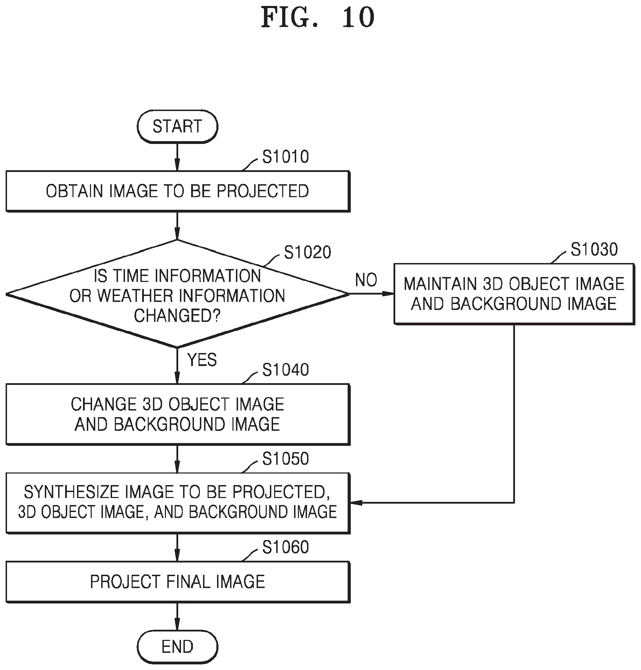

FIG. 10 is a flowchart illustrating an example method of operating the projection device 100 according to an embodiment of the disclosure.

Referring to FIG. 10, the projection device 100 according to an embodiment of the disclosure may obtain an image to be projected (S1010).

The image according to an embodiment of the disclosure may be an image previously stored in the projection device 100 or an image received from an external device. However, the disclosure is not limited thereto. In addition, the image according to an embodiment of the disclosure may be an image on which a variety of image processing such as decoding, scaling, noise filtering, frame rate conversion, resolution conversion, etc. has been performed by a video processor.

When the projection device 100 projects video content, the projection device 100 may sequentially obtain video frame images included in the video content.

The projection device 100 according to an embodiment of the disclosure may identify whether time information or weather information has changed (S1020).

For example, the projection device 100 may obtain the time information or the weather information from an external device or a server. The projection device 100 may obtain the time information using an internal timer. However, the disclosure is not limited thereto.

When time information or the weather information does not change, the projection device 100 according to an embodiment of the disclosure may maintain a virtual space image being projected without changing the virtual space image (S1030).

For example, when time information or the weather information does not change, the projection device 100 may continue to maintain a 3D object image and a background image projected along with a previous frame image.

On the other hand, when time information or the weather information changes, the projection device 100 may change the 3D object image and the background image (S1040).

For example, when the time information changes from daytime to nighttime, the projection device 100 may change the background image to an image representing a night view. The projection device 100 may adjust a shadow effect that appears in the background image and the 3D object image based on the time information.

The projection device 100 may change the background image so that the current weather appears on the background image, based on the weather information. For example, when the current weather is rainy or snowy, the projection device 100 may change the background image to a rainy or snowy background image. However, the disclosure is not limited thereto.

The projection device 100 according to an embodiment of the disclosure may synthesize the image to be projected, the 3D object image, and the background image (S1050).

For example, the projection device 100 may synthesize the 3D object image and the background image to generate a virtual space image. The projection device 100 may overlap the 3D object image on the background image to synthesize the 3D object image and the background image.

In addition, the projection device 100 may overlap the image to be projected (image content) on the virtual space image, thereby generating a final image. For example, the 3D object image may include an object (e.g., a display) for displaying the image to be projected. The projection device 100 may overlap the image (image content) to be projected onto the corresponding object (e.g., the display).

The projection device 100 according to an embodiment of the disclosure may project the final image onto the screen or space (S1060).

The projection device 100 according to an embodiment of the disclosure may project not only the image content to be viewed but also the virtual space image onto the screen or space, thereby providing the user with the experience of watching the image content in various environments. In addition, the projection device 100 may adjust the 3D object image and the background image according to the time information or the weather information. Accordingly, the sense of reality that the user feels regarding the virtual space image may be improved.

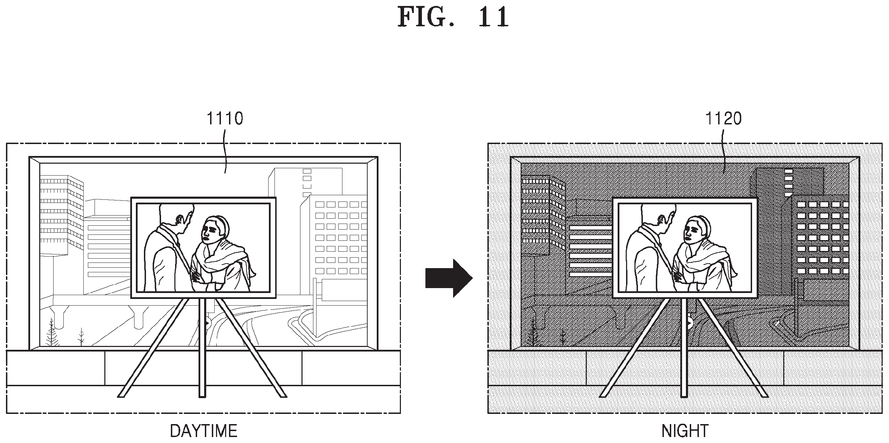

FIG. 11 is a diagram illustrating an example operation in which the projection device 100 changes a virtual space image as time information changes according to an embodiment of the disclosure.

Referring to FIG. 11, the projection device 100 according to an embodiment of the disclosure may obtain current time information. For example, the projection device 100 may receive the current time information from an external device or an external server. The projection device 100 may obtain the time information using an internal timer. However, the disclosure is not limited thereto.

The projection device 100 according to an embodiment of the disclosure may apply the current time information to a background image. For example, as shown in FIG. 11, when the current time is daytime (e.g., 1 PM), the projection device 100 may set the background image to a daytime city view 1110. In addition, the projection device 100 may adjust a shadow effect that appears in the background image and a 3D object image based on a location of the sun at the corresponding time according to the current time information, a projection direction, etc.

On the other hand, when the current time is at night (e.g., 10 PM), the projection device 100 may change the background image to a night city view 1120. The projection device 100 may adjust a color or brightness of the 3D object image based on the current time information. However, the disclosure is not limited thereto.

The projection device 100 according to an embodiment of the disclosure may adjust the 3D object image and the background image according to the current time information, thereby improving the sense of reality that a user feels regarding the virtual space image.

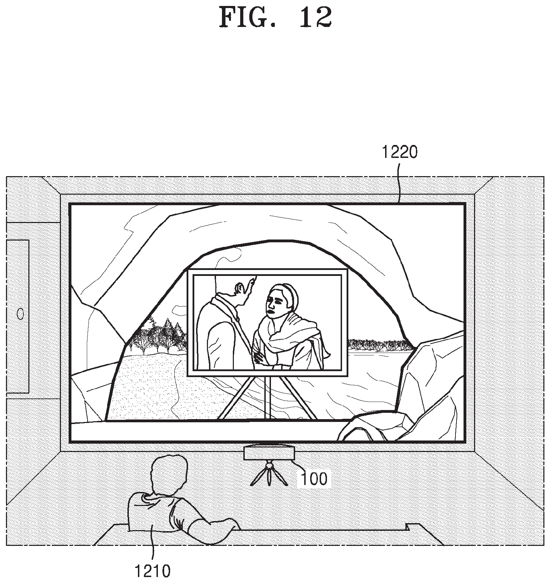

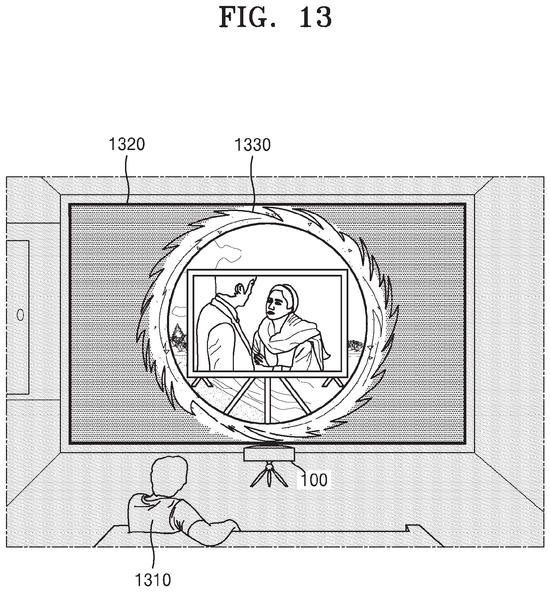

FIGS. 12 and 13 are diagrams illustrating examples in which the projection device 100 provides various virtual space images 1220 and 1320 according to an embodiment of the disclosure.

Referring to FIG. 12, the projection device 100 according to an embodiment of the disclosure may project the virtual space image 1220 including an object image including a cave and a background image representing a coastal view.

The projection device 100 may generate the virtual space image 1220 so that a user 1210 has the feeling of being located inside the cave and looking outside the cave from a view of the user 1210, based on spatial information of a screen and location information of the user 1210.

For example, the projection device 100 may adjust a brightness of an image representing the cave so that the user 1210 feels like moving toward the outside of the cave as moving closer to the screen. The projection device 100 may adjust the coastal view so that a part which was not displayed on the background image is also displayed as the user 1210 moves closer to the screen. However, the disclosure is not limited thereto.

In addition, referring to FIG. 13, the projection device 100 according to an embodiment of the disclosure may project the virtual space image 1320 showing a dimension change effect. For example, as shown in FIG. 13, the projection device 100 may generate the virtual space image 1320 on which an object image including an object 1330 (e.g., a wormhole) representing a connection passage with another space and time and a background image within the connecting passage appear. The projection device 100 may project image content in the object 1330 representing the connecting passage. However, the disclosure is not limited thereto.

The projection device 100 according to an embodiment of the disclosure may generate various virtual space images and project the virtual space images together with image content, thereby providing a user with various viewing experiences.

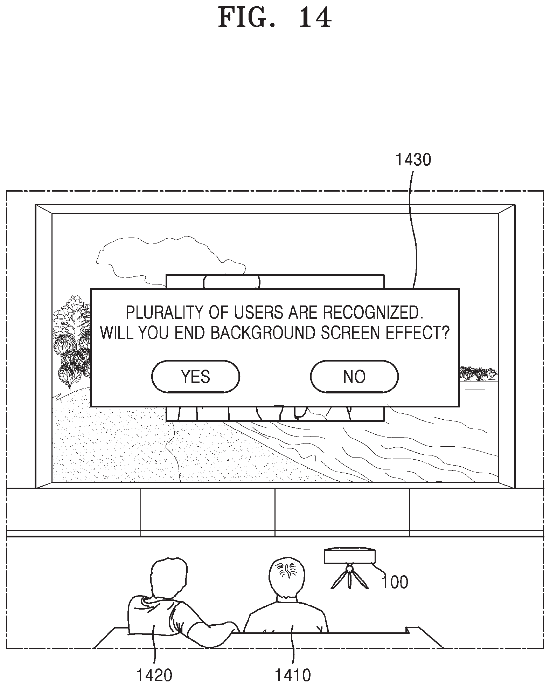

FIG. 14 is a diagram illustrating an example operation of the projection device 100 when a plurality of users are recognized according to an embodiment of the disclosure.

The projection device 100 according to an embodiment of the disclosure may recognize a first user 1410 among the plurality of users. The projection device 100 may generate a 3D object image and a background image based on location information of the recognized first user 1410 and spatial information of a screen. The projection device 100 may synthesize the 3D object image and the background image to generate a virtual space image, and synthesize an image to be projected and the virtual space image to generate a final image. The projection device 100 may project the final image onto the screen.

The projection device 100 may additionally recognize a second user 1420 among the plurality of users based on a location of the first user 1410 while projecting the final image.

When the second user 1420 is additionally recognized, the projection device 100 may project, on the screen or space, a notification message 1430 asking whether to end projection of the virtual space image. When the projection of the virtual space image ends, the projection device 100 may project only the image to be projected (image content) onto the screen or space.

When a distance between a point at which the second user 1420 is located and a point at which the first user 1410 is located is less than a preset value, the projection device 100 may continue to project the final image without projecting the notification message 1430.

The projection device 100 may project, on the screen or space, a notification message to move a location of the second user 1420 near the first user 1410. However, the disclosure is not limited thereto.

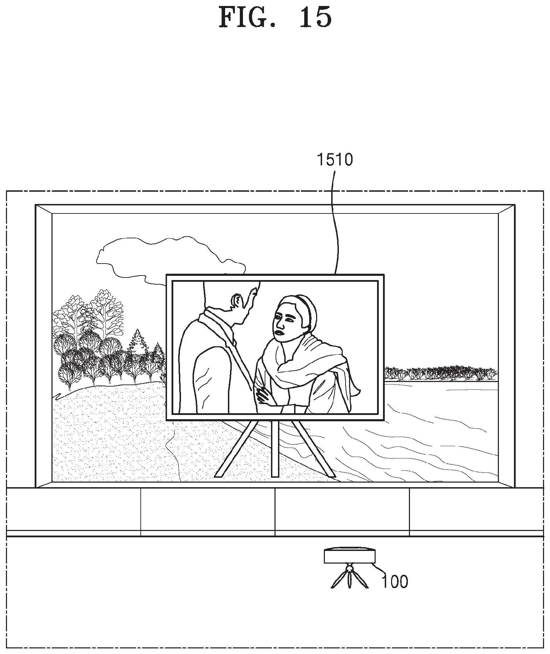

FIG. 15 is a diagram illustrating an example operation in which the projection device 100 projects a virtual space image according to an embodiment of the disclosure.

Referring to FIG. 15, the projection device 100 according to an embodiment of the disclosure may have a display device 1510 present on a screen or space to project. The display device 1510 according to an embodiment of the disclosure may be implemented in various forms, such as a TV including a display, a smart monitor, a video wall, a digital signage, etc. In addition, the display device 1510 may be a fixed electronic device disposed in a fixed location. However, the disclosure is not limited thereto.

The projection device 100 may project a virtual space image generated using the method described in FIGS. 1 to 14 onto a screen or space. At this time, a 3D object image included in the virtual space image may not include a display object. Image content may be displayed through the display device 1510.

The projection device 100 according to an embodiment of the disclosure may recognize a location, size, and shape of the display device 1510 and generate the virtual space image based on the recognized location, size, and shape of the display device 1510. However, the disclosure is not limited thereto.

The projection device 100 according to an embodiment of the disclosure and the display device 1510 may be communicatively connected to each other. The display device 1510 may transmit information about the displayed image content to the projection device 100. The projection device 100 may generate the virtual space image based on the information about the image content. For example, the projection device 100 may determine a 3D object image or a background image based on category information, mood or theme information, etc. of the image content. However, the disclosure is not limited thereto.

Operations of the projection device 100 according to an embodiment of the disclosure are described with reference to FIGS. 1 to 15, but the operations described above are not limited to the operations of the projection device 100. For example, the operations of the projection device 100 according to an embodiment of the disclosure described with reference to FIGS. 1 to 15 may be performed by a display device including a display. The display device may include a large display. The display device may generate a virtual space image including the 3D object image and the background image described with reference to FIGS. 1 to 15. In addition, the display device may synthesize image content and the virtual space image and display the image content on the display.

For example, the display device may obtain location information of a user using at least one camera. The display device may generate or adjust the background image and the3D object image based on a size of the display and the location information of the user. When a location of the user changes, the display device may change a 3D effect that appears in the 3D object image. In addition, the display device may adjust a view of the background image displayed on the display based on the location information of the user. The display device may change or adjust the 3D object image and the background image based on time information or weather information.

The display device may perform the operations described above by applying the operations of the projection device 100 described with reference to FIGS. 1 to 15. In addition, besides the operations described above, the operations of the projection device 100 described with reference to FIGS. 1 to 15 may be performed by the display device.

The display device may display not only image content to be viewed but also the virtual space image, thereby providing the user with the experience of watching the image content in various environments. In addition, the display device may adjust the 3D object image and the background image according to the location of the user (viewer), thereby improving the sense of reality of the user regarding the virtual space image.

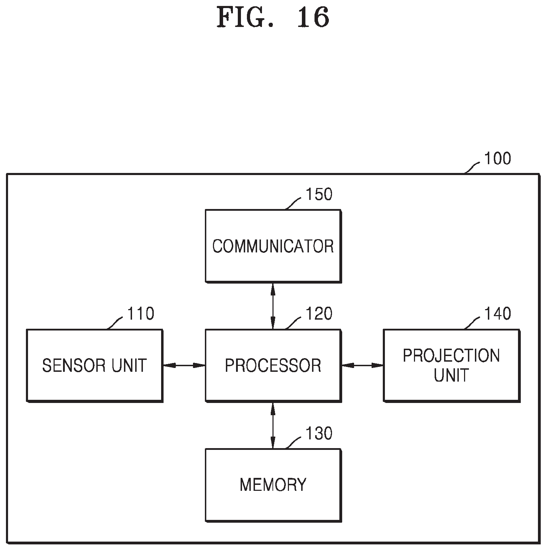

FIG. 16 is a block diagram illustrating an example configuration of the projection device 100 according to an embodiment of the disclosure.

Referring to FIG. 16, the projection device 100 according to an embodiment of the disclosure may include a sensor unit (e.g., including at least one sensor) 110, a processor (e.g., including processing circuitry) 120, a memory 130, a projection unit (e.g., including projection circuitry) 140, and a communicator (e.g., including communication circuitry) 150.

The sensor unit 110 according to an embodiment of the disclosure may include at least one sensor and detect a state around the projection device 100 and transmit the sensed information to the processor 120. The sensor unit 110 may include, for example, and without limitation, an image sensor, a depth sensor, an infrared sensor, etc.

An image sensor according to an embodiment of the disclosure may obtain image frames such as still images or moving images. For example, the image sensor may capture an image outside the projection device 100. The image captured by the image sensor may be processed through the processor 120 or a separate image processor.

The depth sensor according to an embodiment of the disclosure may obtain depth information about one or more objects included in a space. The depth information may correspond to a distance from the depth sensor to a specific object, and as the distance from the depth sensor to the specific object increases, a depth value may increase. The depth sensor according to an embodiment of the disclosure may obtain depth information of an object in various ways, for example, using at least one of a time of flight (TOF) method, a stereo image method, or a structured light method.

The depth sensor according to an embodiment of the disclosure may include at least one camera, and may obtain depth information about a real space included in a FOV of the camera included in the depth sensor.

In addition, the sensor unit 110 may include, for example, and without limitation, an acceleration sensor, a location sensor, a temperature/humidity sensor, an illumination sensor, a geomagnetic sensor, a gyroscope sensor, a microphone, etc., in addition to the image sensor, the depth sensor, and the infrared sensor. However, the disclosure is not limited thereto.

The communicator 150 according to an embodiment of the disclosure may include various communication circuitry and transmit and receive data or a signal to and from an external device or a server. For example, the communicator 150 may include a Wi-Fi module, a Bluetooth module, an infrared communication module, a wireless communication module, a local area network (LAN) module, an Ethernet module, or a wired communication module. Here, each communication module may be implemented in the form of at least one hardware chip.

The Wi-Fi module and the Bluetooth module may communicate through a W-Fi method and a Bluetooth method, respectively. When the Wi-Fi module or the Bluetooth module is used, various types of connection information, such as service set identifier (SSID) or a session key, may be transmitted or received first, communicatively connected to using the same, and then various types of information may be transmitted or received. The wireless communication module may include at least one communication chip performing communication according to various wireless communication standards, such as ZigBee, 3rd generation (3G), 3rd generation partnership project (3GPP), long-term evolution (LTE), LTE advanced (LTE-A), 4th generation (4G), and 5th generation (5G).

The communicator 150 according to an embodiment of the disclosure may receive, from the external device, an image to be projected or image content. In addition, the communicator 150 according to an embodiment of the disclosure may receive time information, weather information, etc. from an external device or an external server.

The communicator 150 according to an embodiment of the disclosure may communicate with a control device. The communicator 150 may receive, from the control device, a signal corresponding to a user input.

The processor 120 according to an embodiment of the disclosure may include various processing circuitry and control overall operations of the projection device 100 and a signal flow between internal components of the projection device 100, and perform a function of processing data.

The processor 120 may include a single core, a dual core, a triple core, a quad core, or a multiple core. In addition, the processor 120 may include a plurality of processors. For example, the processor 120 may be implemented by a main processor (not shown) and a sub processor (not shown).

The processor 120 may include at least one of a central processing unit (CPU), a graphics processing unit (GPU), or a video processing unit (VPU). Alternatively, according to an embodiment of the disclosure, the processor 120 may be implemented in the form of a system-on-chip (SoC) in which at least one of CPU, GPU, or VPU is integrated. The processor 120 may further include a neural processing unit (NPU). The processor 120 according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The memory 130 according to an embodiment of the disclosure may store various types of data, programs, or applications for driving and controlling the projection device 100.

In addition, the program stored in the memory 130 may include one or more instructions. The program (one or more instructions) or application stored in the memory 130 may be executed by the processor 120.

The processor 120 according to an embodiment of the disclosure may be configured to execute the one or more instructions stored in the memory 130 and may be configured to obtain an image to be projected. The image according to an embodiment of the disclosure may be an image previously stored in the memory 130 or an image received from the external device through the communicator 150. In addition, the image may be an image on which a variety of image processing such as decoding, scaling, noise filtering, frame rate conversion, resolution conversion, etc. has been performed by a video processor.

The processor 120 according to an embodiment of the disclosure may execute the one or more instructions stored in the memory 130 and may be configured to obtain an image (image content) to be projected. The image according to an embodiment of the disclosure may be an image previously stored in the memory 130 or an image received from an external device through the communicator 150. However, the disclosure is not limited thereto. In addition, the image according to an embodiment of the disclosure may be an image on which a variety of image processing such as decoding, scaling, noise filtering, frame rate conversion, resolution conversion, etc. has been performed by the video processor.

The processor 120 according to an embodiment of the disclosure may execute the one or more instructions stored in the memory 130 and may be configured to obtain spatial information of a screen. For example, the processor 120 may obtain a captured image of the screen from the image sensor included in the sensor unit 110, and may obtain depth information of the screen from the depth sensor included in the sensor unit 110. However, the disclosure is not limited thereto.

The processor 120 may receive the captured image of the screen and the depth information of the screen from the external device through the communicator 150.

The processor 120 may obtain spatial information of the screen based on the captured image and the depth information. The spatial information of the screen may include a shape of the screen, distance information from the projection device 100 to the screen, location information of the screen, size information of the screen, location information about corners (boundaries) of the screen, etc.

The processor 120 according to an embodiment of the disclosure may execute the one or more instructions stored in the memory 130 and may be configured to obtain location information of a user.

For example, the processor 120 may obtain the location information of the user using an image sensor or an infrared sensor included in the sensor unit 110. The processor 120 may identify whether the user is present, a distance between the user and the projection device 100, a direction in which the user is located with respect to the projection device 100, etc. However, the disclosure is not limited thereto.

The processor 120 according to an embodiment of the disclosure may execute the one or more instructions stored in the memory 130 and may be configured to generate a 3D object image and a background image based on the spatial information of the screen and the location information of the user.

The processor 120 may set the 3D object image and the background image based on a user input. For example, the processor 120 may set the 3D object image based on a user input that selects one of candidate template images previously stored in the memory 130. The memory 130 may previously store the candidate template images in which shapes, sizes, locations, etc. of windows included in the images are different. The processor 120 may set the background image based on a user input that selects one of candidate background images previously stored in the memory 130. The memory 130 may previously store the candidate background images such as the sea, beach, mountain, city, etc.

The processor 120 may set the background image based on category information of an image to be projected.

The processor 120 according to an embodiment of the disclosure may execute the one or more instructions stored in the memory 130 and may be configured to set the 3D object image and the background image based on the spatial information of the screen and the location information of the user, when the 3D object image and the background image are set.

For example, the processor 120 may determine sizes of the 3D object image and the background image based on the spatial information of the screen. The processor 120 may adjust the sizes of the 3D object image and the background image based on recognized corners of a wall so that the 3D object image and the background image are projected onto an entire wall. However, the disclosure is not limited thereto.

The processor 120 may adjust depth information of objects included in the 3D object image based on the spatial information of the screen and the location information of the user. For example, when the location of the user changes, a viewpoint, FOV, gaze direction, etc. of the user watching the 3D object image may change. The processor 120 may change a 3D effect that appears in the 3D object image according to the changed viewpoint, FOV, gaze direction, etc. of the user For example, the processor 120 may adjust locations, directions, depth information, etc. of the objects included in the 3D object image based on the changed viewpoint, FOV, gaze direction, etc. of the user.

The processor 120 may adjust the background image based on the spatial information of the screen and the location information of the user. For example, a view of the background image projected onto the screen may be adjusted, based on the location information of the user. When the user moves to the left, the processor 120 may adjust the background image so that an image is added to the right of the background image and a partial area of the left of the background image is deleted.

The processor 120 according to an embodiment of the disclosure may execute the one or more instructions stored in the memory 130 and may be configured to synthesize the image to be projected, the 3D object image, and the background image.

For example, the processor 120 may synthesize the 3D object image and the background image to generate a virtual space image. The processor 120 may overlap the 3D object image on the background image to synthesize the 3D object image and the background image.

The processor 120 may overlap the image to be projected (image content) on the virtual space image, thereby generating a final image. For example, the 3D object image may include an object (e.g., a display) for displaying the image to be projected. The processor 120 may overlap the image (image content) to be projected onto the corresponding object (e.g., the display).

The processor 120 may control the projection unit 140 to project the final image obtained by synthesizing the background image and the image to be projected onto the screen or space.

The projection unit 140 according to an embodiment of the disclosure may include various projection circuitry, including, for example, and without limitation, a light source that generates light, a lens, etc., and may further include a driver that adjusts a direction, location, or angle of projection. The projection unit 140 may drive the light source or adjust the direction, location, or angle of projection according to a control signal received from the processor 120, thereby projecting the final image.

The block diagram of the projection device 100 shown in FIG. 16 is a block diagram according to an embodiment of the disclosure. Components of the block diagram may be integrated, a component may be added, or a component may be omitted according to the specification of the projection device 100 actually implemented. In other words, two or more components may be integrated into one component or one component may be divided into two or more components when necessary. Also, a function performed by each block is only for describing embodiments of the disclosure and specific operations or devices do not limit the scope of right of the disclosure.

When the projection device 100 according to an embodiment of the disclosure is implemented as a display device, the projection device 100 may further include a display. The display may display a final image including a virtual space image and image content generated by the processor 120.

A projection device according to an example embodiment of the disclosure may include a projection unit comprising projection circuitry, a memory storing one or more instructions, and at least one processor, comprising processing circuitry, individually and/or collectively configured to execute the one or more instructions.

At least one processor may, individually and/or collectively, be configured to obtain a first image.

At least one processor may, individually and/or collectively, be configured to obtain spatial information of a screen and location information of a user.

At least one processor may, individually and/or collectively, be configured to generate a 3D object image and a background image, based on the spatial information of the screen and the location information of the user.

At least one processor may, individually and/or collectively, be configured to control the projection unit to project a second image obtained by synthesizing the first image, the 3D object image, and the background image.

At least one processor may, individually and/or collectively, be configured to set the 3D object image and the background image, based on a user input.

At least one processor may, individually and/or collectively, be configured to adjust the set 3D object image and background image, based on the location information of the user and the spatial information of the screen.

At least one processor may, individually and/or collectively, be configured to obtain category information of the first image.

At least one processor may, individually and/or collectively, be configured to determine the background image based on the category information.

At least one processor may, individually and/or collectively, be configured to determine depth information about at least one object included in the 3D object image, based on the location information of the user and the spatial information of the screen.

At least one processor may, individually and/or collectively, be configured to adjust at least one of the 3D object image or the background image according to a gaze direction of the user, based on a change in the location information of the user.

At least one processor may, individually and/or collectively, be configured to obtain at least one of time information or weather information.

At least one processor may, individually and/or collectively, be configured to adjust at least one of the 3D object image or the background image, based on at least one of the time information or the weather information.

At least one processor may, individually and/or collectively, be configured to obtain a projection direction.

At least one processor may, individually and/or collectively, be configured to adjust a shadow effect appearing on at least one of the 3D object image or the background image, based on the time information and the projection direction.

At least one processor may, individually and/or collectively, be configured to synthesize the first image and at least one object included in the 3D object image, based on a shape and a size of the at least one object.

At least one processor may, individually and/or collectively, be configured to determine at least one of a projection direction, a projection location, or a projection size of the second image, based on the spatial information of the screen.

The projection device may further include at least one camera.

At least one processor may, individually and/or collectively, be configured to obtain the spatial information of the screen and the location information of the user, based on an image captured by the at least one camera.

A method of operating a projection device according to an example embodiment of the disclosure may include obtaining a first image.

The method according to an example embodiment of the disclosure may include obtaining spatial information of a screen.

The method according to an example embodiment of the disclosure may include obtaining location information of a user.

The method according to an example embodiment of the disclosure may include generating a 3D object image and a background image, based on the spatial information of the screen and the location information of the user.

The method according to an example embodiment of the disclosure may include projecting a second image obtained by synthesizing the first image, the 3D object image, and the background image.

The method according to an example embodiment of the disclosure may further include setting the 3D object image and the background image, based on a user input.

The generating of the 3D object image and the background image may include adjusting the set 3D object image and background image, based on the location information of the user and the spatial information of the screen.

The method according to an example embodiment of the disclosure may further include obtaining category information of the first image.

The method according to an example embodiment of the disclosure may further include determining the background image based on the category information.

The generating of the 3D object image and the background image may include determining depth information about at least one object included in the 3D object image, based on the location information of the user and the spatial information of the screen.

The generating of the 3D object image and the background image may include adjusting at least one of the 3D object image or the background image according to a gaze direction of the user, based on a change in the location information of the user.

The method may further include obtaining at least one of time information or weather information.

The method may further include adjusting at least one of the 3D object image or the background image, based on at least one of the time information or the weather information.

The method may further include obtaining a projection direction.

The adjusting of at least one of the 3D object image or the background image, based on at least one of the time information or the weather information may include adjusting a shadow effect appearing on at least one of the 3D object image or the background image, based on the time information and the projection direction.

The method may further include synthesizing the first image and at least one object included in the 3D object image, based on a shape and a size of the at least one object.

The method may further include determining at least one of a projection direction, a projection location, or a projection size of the second image, based on the spatial information of the screen.

The projection device according to an embodiment of the disclosure may generate various virtual space images and project the virtual space images together with image content, thereby providing a user with various viewing experiences.

The projection device may adjust the 3D object image and the background image according to the location of the user, thereby improving the sense of reality that the user feels regarding the virtual space image.

In addition, the projection device according to an embodiment of the disclosure may adjust the 3D object image and the background image according to the time information or the weather information, thereby improving the sense of reality that the user feels regarding the virtual space image.

An operating method of a projection device according to an embodiment of the disclosure may be recorded on a non-transitory computer-readable recording medium by being implemented in the form of program commands to be executable using various computers. The non-transitory computer-readable recording medium may include a program command, a data file, or a data structure solely or in combination. The program commands recorded in the computer-readable recording medium may be specially designed or well known to one of ordinary skill in the computer software field. Examples of a non-transitory computer-readable recording medium include magnetic media such as hard disks, floppy disks, and magnetic tapes, optical media such as CD-ROMs and DVDs, magneto-optical media such as floptical disks, and hardware devices specially configured to store and perform program commands, such as read-only memory (ROM), random-access memory (RAM), and flash memory. Examples of the computer command include machine codes generated by a compiler, and high-level language codes executable by a computer using an interpreter.

In addition, an operating method of a projection device according to embodiments of the disclosure may be provided by being included in a computer program product. The computer program products are products that may be traded between sellers and buyers.

The computer program product may include a software program or a computer-readable storage medium storing a software program. For example, the computer program product may include a product (e.g., a downloadable application) in the form of a software program that is electronically distributable through a manufacturer of the electronic device or an electronic market (e.g., Google PlayStore^{™} or AppStore^{™}). For electronic distribution, at least a part of the software program may be stored in the storage medium or temporarily generated. In this case, the storage medium may be a storage medium of a server of a manufacturer, a server of an electronic market, or a relay server that temporarily stores the software program.

The computer program product may include a storage medium of a server or a storage medium of a client device in a system including the server and the client device. Alternatively, when there is a third device (e.g., a smartphone) communicatively connected to the server or the client device, the computer program product may include a storage medium of the third device. Alternatively, the computer program product may include the software program transmitted from the server to the client device or the third device, or transmitted from the third device to the client device.

In this case, one of the server, the client device, and the third device may perform a method according to embodiments of the disclosure by executing the computer program product. Alternatively, two or more of the server, the client device, and the third device may execute the computer program product to perform the method according to various embodiments of the disclosure in a distributed fashion.

For example, the server (e.g., a cloud server or an artificial intelligence server) may execute the computer program product stored in the server to control the client device communicatively connected to the server to perform the method according to various embodiments of the disclosure.

While the disclosure has been illustrated and described with reference to various example embodiments, it will be understood that the various example embodiments are intended to be illustrative, not limiting. It will be further understood by those skilled in the art that various changes in form and detail may be made therein without departing from the scope of the disclosure including the appended claims. It will also be understood that any of the embodiment(s) described herein may be used in connection with any other embodiment(s) described herein.

## Claims

1. A projection device (100) comprising:
a projection unit (140) comprising projection circuitry;
a memory (130) storing one or more instructions; and
at least one processor (120), comprising processing circuitry, configured to execute the one or more instructions, wherein the one or more instructions, when executed by the at least one processor individually and/or collectively, cause the projection device to:
obtain a first image,
obtain spatial information of a screen and location information of a user,
generate a three-dimensional (3D) object image and a background image, based on the spatial information of the screen and the location information of the user, and
control the projection unit to project a second image obtained by synthesizing the first image, the 3D object image, and the background image.

2. The projection device of claim 1, wherein the one or more instructions, when executed by the at least one processor (120) individually and/or collectively, further cause the projection device to:
set the 3D object image and the background image, based on a user input, and
adjust the set 3D object image and background image, based on the location information of the user and the spatial information of the screen.

3. The projection device of claim 1, wherein the one or more instructions, when executed by the at least one processor (120) individually and/or collectively, further cause the projection device to:
obtain category information of the first image, and
determine the background image based on the category information.

4. The projection device of any one of claims 1 to 3, wherein the one or more instructions, when executed by the at least one processor (120) individually and/or collectively, further cause the projection device to determine depth information about at least one object included in the 3D object image, based on the location information of the user and the spatial information of the screen.

5. The projection device of any one of claims 1 to 4, wherein the one or more instructions, when executed by the at least one processor (120) individually and/or collectively, further cause the projection device to adjust at least one of the 3D object image or the background image according to a gaze direction of the user, based on a change in the location information of the user.

6. The projection device of any one of claims 1 to 5, wherein the one or more instructions, when executed by the at least one processor (120) individually and/or collectively, further cause the projection device to:
obtain at least one of time information or weather information, and
adjust at least one of the 3D object image or the background image, based on at least one of the time information or the weather information.

7. The projection device of claim 6, wherein the one or more instructions, when executed by the at least one processor (120) individually and/or collectively, further cause the projection device to:
obtain a projection direction, and
adjust a shadow effect appearing on at least one of the 3D object image or the background image, based on the time information and the projection direction.

8. The projection device of any one of claims 1 to 7, wherein the one or more instructions, when executed by the at least one processor (120) individually and/or collectively, further cause the projection device to synthesize the first image and at least one object included in the 3D object image, based on a shape and a size of the at least one object.

9. The projection device of any one of claims 1 to 8, wherein the one or more instructions, when executed by the at least one processor (120) individually and/or collectively, further cause the projection device to determine at least one of a projection direction, a projection location, or a projection size of the second image, based on the spatial information of the screen.

10. The projection device of any one of claims 1 to 9, further comprising: at least one camera,
wherein the one or more instructions, when executed by the at least one processor individually and/or collectively, cause the projection device to obtain the spatial information of the screen and the location information of the user, based on an image captured by the at least one camera.

11. A method of operating a projection device, the method comprising:
obtaining a first image (S310);
obtaining spatial information of a screen (S320);
obtaining location information of a user (S330);
generating a three-dimensional (3D) object image and a background image, based on the spatial information of the screen and the location information of the user (S340); and
projecting a second image obtained by synthesizing the first image, the 3D object image, and the background image (S360).

12. The method of claim 11, further comprising: setting the 3D object image and the background image, based on a user input,
wherein the generating of the 3D object image and the background image includes adjusting the set 3D object image and background image, based on the location information of the user and the spatial information of the screen.

13. The method of claim 11, further comprising:
obtaining category information of the first image; and
determining the background image based on the category information.

14. The method of any one of claims 11 to 13, wherein the generating of the 3D object image and the background image includes determining depth information about at least one object included in the 3D object image, based on the location information of the user and the spatial information of the screen.

15. A non-transitory computer-readable recording medium having stored therein a program for performing the method of any one of claims 11 to 14.
